# EUROPEAN PATENT SPECIFICATION

(11) **EP 0 213 505 B1**
(45) Date of publication and mention of the grant of the patent: **02.06.1993**
(21) Application number: 86111285.2
(22) Date of filing: 11.08.1983
(51) Int. Cl.: F16L 19/06

(54) **Pipe coupling**
Rohrverbindung
Raccord pour tuyau

(30) Priority: 11.08.1982 SE 8204648
(43) Date of publication of application: 11.03.1987
(62) Divisional of application: 83902543.4
(73) Proprietor: Iwanicki, Andrzej, Tomasz, S-600 50 Jönaker (SE)
(72) Inventor: Iwanicki, Andrzej, Tomasz, S-600 50 Jönaker (SE)

(56) References cited:
- WO-A-82/00505
- FR-A- 1 242 421
- FR-A- 1 246 929
- US-A- 502 665
- US-A- 3 405 751

## Description

The present invention relates to a pipe coupling system, comprising different kinds of coupling details, such as pipe joints, elbows and Ts having threaded and rigid end portions.

Coupling details of this kind are previously known through e.g. US-A-502.665, FR-A-1.242.421 and US-A-3.405.751.
All of these known details must, however, be stocked for all the pipe dimensions on the market, to enable pipe connections, e.g. in the form of joints, adapters, tees, elbows and direct pipe connections in plastics and metal pipes. In order to satisfy the requirements of the market it is necessary to stock different dimensions and coupling alternatives at all sales outlets, resulting in that a large amount of capital must be invested in stock on the manufacturing side as well as on the sales side, in turn leading to large interest losses which must be covered by the price of the different connection details. Costs for the storage volumes utilized will also be considerable, and not inconsiderably affect the product price.

In order to come to grips with these problems and considerably to reduce the need of stocking components, without the coupling variations available to the users being reduced on this score, there is provided in accordance with the invention a pipe coupling system distinguished in essentials by the fact that each of the details are formed in one piece and all end portions are provided with external and internal threads of uniform and constant pitch, as known per se, and with a guide surface for interaction with clamping and sealing means, and that the details are desinged in different sizes and thus adapted that the external threads of each deteil mate with the internal threads of the nearest in size bigger detail, and vice versa, and that each end of the different details is adapted for connection to pipes and tubes of at least three different kinds, viz. pipes with external or internal threads or even pipes, in the last case said guide surface being adapted to cooperate with said clamping and sealing means and with bushing rings, each having an inner seat diameter adapted to an actual pipe diameter and an outer diameter adapted to the inner diameter of the coupling detail, thereby permitting connection of even pipes and tubes with diameters less than the inner diameter of the respective coupling detail.
Since outside and inside threads on each connection end of the detail decrease its strength properties, there must be a given minimum thickness between the threads. This may be provided by a total increase of the material thickness, which makes the product more expensive and heavier, howewer,

In accordance with one embodiment of the invention, it is therefore proposed that the internal and external threads on each end portion are mutually axially displaced about one half pitch to obtain more even thickness and increased strength of the material lying between the external and internal threads.

In accordance with a further embodiment of the invention, it is suggested that said sealing and clamping means comprises a sealing sleeve portion which upon axial displacement against said guide surface is adapted to seal either directly against the pipe or against the bushing ring applied to the end of the pipe.

Some embodiments selected as pipe couplings forming part of the inventive system are described in detail with reference to the accompanying drawings, where:
Fig. 1 is a cross section through an embodiment of a coupling detail used in the inventive system, and also illustrates the pipe dimensions that may be used with this detail,
Fig. 2 illustrates connection facilities between alternative embodiments of straight and adapter couplings used in the inventive system, shaped in the form of double-threaded straight-through housings.
Fig. 3 illustrates a nut for connection to housings having diffeclamping and sealing means,
Fig. 4 illustrates a straight-through, double-threaded housing connecting two pipes,
Fig. 5 is a cross section of a double thread, where the roots are mutually opposing,
Fig. 6 illustrates an alternative form of double thread, where the roots are staggered half a pitch,
Fig. 7 illustrates a double thread with a separate thread for a locking nut,
Fig. 8 is a chart showing different coupling alternatives and the details included in the alternatives.

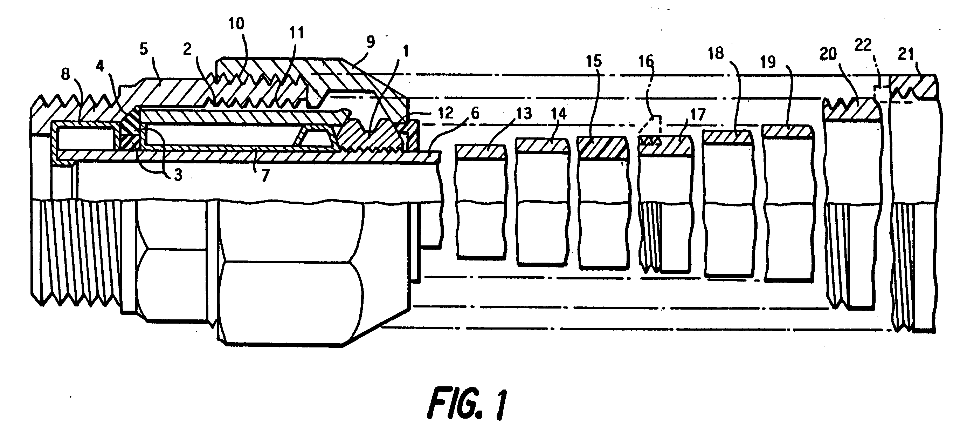

Fig. 1 illustrates how a coupling in the inventive system may be used for connecting a plurality of differently dimensioned pipes of different materials. In this embodiment a clamping and sealing means is formed as two rings. One ring might be said to serve solely as a clamping ring 1, while the other ring serves as guide and sealing ring 2. The left-hand end of the guide and sealing ring 2 bears against the elastic seal 3, which in turn bears against the guiding and sealing surfaci 4 i.e., the step in the stepped bore of the connection coupling housing 5. It will also be seen how differences in dimension between a pipe 6 and the coupling housing 5 are taken up by bushes 7 and 8, which must be adapted to each pipe dimension connected to the coupling housing 5. The latter also accommodates the nut 9 having an internal thread, which is shown here solely to demonstrate that the coupling may also be used in the case where the dimension difference between coupling and pipe is considerable. The coupling housing 5 is threaded both on its exterior 10 and on its interior 11, and in the case illustrated in Fig. 1 the connection could also be made using a nut wish an external thread. The guiding and sealing ring 2 coacts with the guide flange 12 of the nut 9, and it is correspondingly provided with eloping guide surfaces which are pressed against guide surfaces on the clamping ring 1 when the nut 9 is screwed in, thus pressing the clamping ring 1 against the circumference of the pipe 6. To obtain a better grip on the pipe surface, the clamping ring 1 may be provided wing ridges which give a better grip on the pipe surface. The coupling may thus be utilized for pipes of other dimensions than that of the pipe 6 illustrated.

The same clamping and sealing means may be utilized for all pipes 6,13-19. However, pipes 6, 13-18 need specially adapted bushes. The pipe 17 is a metal pipe with a threadad end on which is mounted a locking ring 16, adapted to the pipe seating in the coupling housing 5. The pipe 20 may be threaded directly on to the internal thread 11 of the coupling housing 5, while the pipe 21, which has the greatest diameter, may be connected with the aid of a threaded coupling ring 22. The clamping ring 1 illustrated in Fig.1 can be realized in different ways, depending on the material from which the inserted pipe is made.

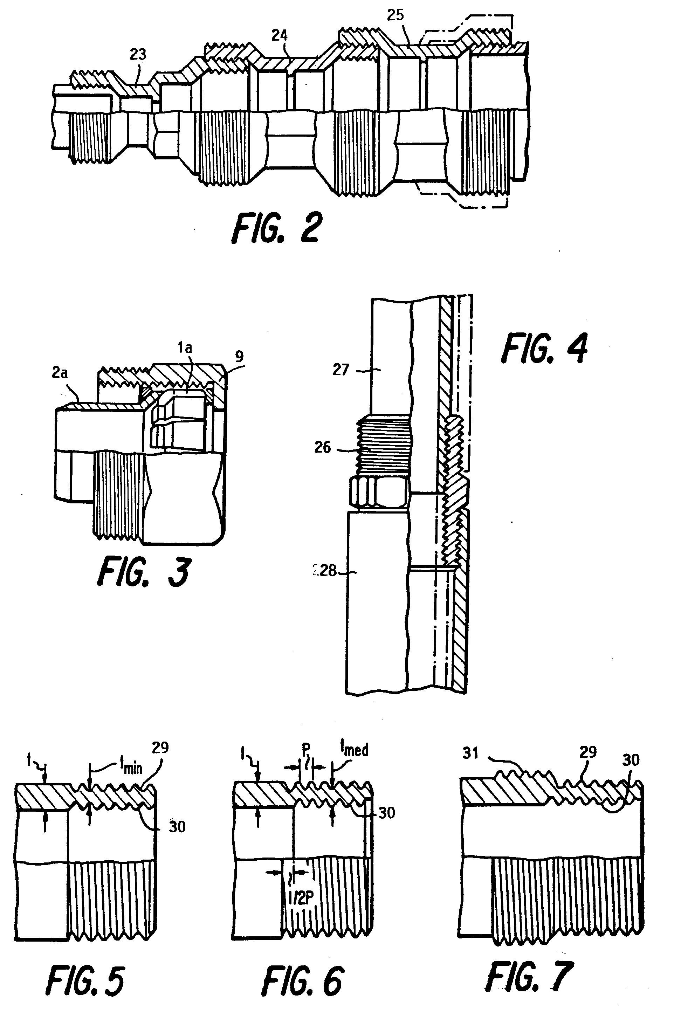

Fig. 2 illustrates three coupling housings 23,24,and 25, all of which are threaded externally and internally at each connection end. The first housing 23 is for a so-called adapter, going from a small to a larger diameter, and can thus connect to a straight- through couplinghousing 24 which can also serve as an adapter coupling, since the right-hand side may be utilized, the latter being screwed into the largest coupling housing 25, where full lines depict a straight-through coupling and dashed lines an adapter coupling. The figure is thus an illustration of the coupling possibilities available when external and internal threads are used according to the inventive system.

Fig. 3 illustrates an example of a connection with clamping and sealing means comprising a ring 1a provided with claws, which are acted on by a clamping and sealing ring 2a formed with a cuneformed tip which will be pressed against the sealing surface 4 (Fig. 1) when the nut 9 is screwed in, thus to translate the axial compression forces into radial compression forces against either the bushing ring 7 (Fig. 1) or directly against the pipe 19.

Fig. 4 illustrates the use of a coupling housing 26, which is provided with external and internal threads and can therefore also be used as a coupling between pipes 27 and 28 of different diameters.

Figs. 5 and 6 are cross sections of such double-threaded details as coupling housings or nuts. Fig. 5 illustrates the external thread 29 and internal thread 30 disposed directly opposite each other, such that the threaded part is given dimension variations lying between the material thickness t and a least thickness tₘᵢₙ at the roots of the threads. The strength of the threaded portion will of course be determined by the least thickness tₘᵢₙ . In Fig.6 the threads have been mutually displaced half a pitch, resulting in that the material thickness in the theraded portion has a constant thickness t_{med} lying between t_{med} and t. Strength has thus been substantially increased in the threaded portion, signifying that the material thickness t for a given requirement of least strength of the thread may be reduced, which means of course that both weight and material costs are reduced.

Fig. 7 illustrates an embodiment having a thread 31 for the locking nut. This thread has considerably less pitch than the pipe thread 29 which facilitates tightening the locking nut.

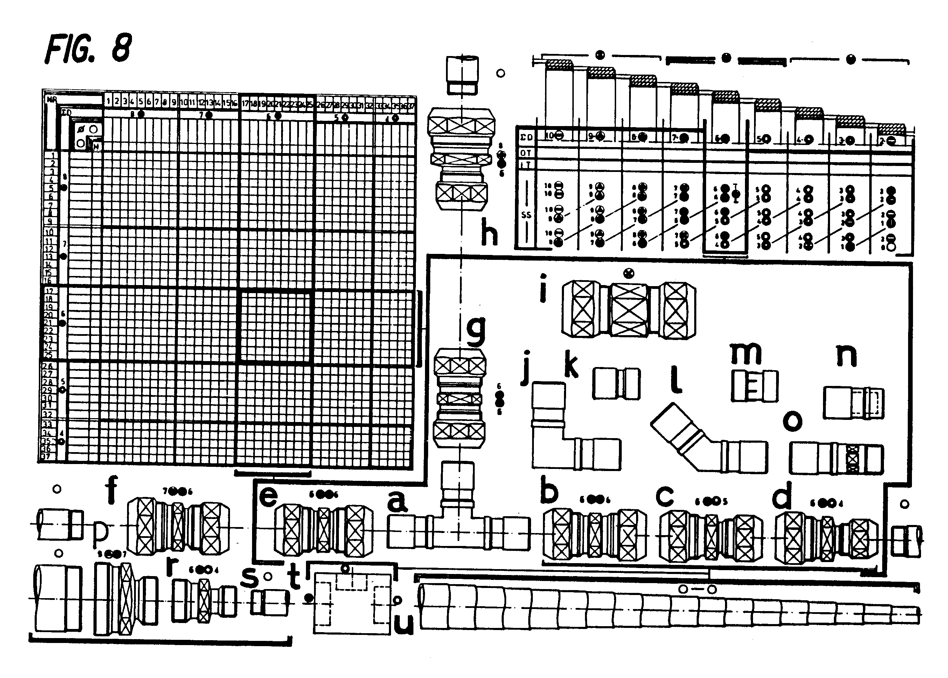

Fig. 8 illustrates with the aid of tables and a coupling schedule the assembly of a pipe coupling system in accordance with the invention, intended to cover all the pipe dimensions on the market. Some of these dimemsions have been numbered from 1 to 37 in a coordinate table, where the numeral l denotes the largest and the numeral 37 the smallest dimension. The intersection point for the pipe dimensions which are to be coupled denotes the coordinates for the square representing the coupling in question. In the coordinate table there are also symbols in the form of circles denoting what inventive coupling corresponds to the different pipe dimensions. Each symbol covers a given number of dimension numbers and the intersections between the symbols form fields, which have been indecated in the table by double lines. The number of squares thus denote how many pipe dimensions can be connected by one pipe coupling.

In the key to the right in the figure, the circle symbols are tabulated to correspond to the respective diameters of the different pipe couplings. Combinations of the different symbols in the key denote which combination of the two connections on an inventive coupling covers a given field in the coordinate table.

For example, the full lines in the coordinate table show the coupling facilities for pipe diameters in the diameter interval 17-25. This interval has been symbolized by a filled circle, and the corresponding field has been given two filled circles which are to be found in the key and represent a pipe coupling with two connections of the same dimension. This dimemsion is similarly framed by full lines and represented by a filled circle. In the use of a pipe coupling depicted by the details **b, e** and g according to the chart, pipes in the dimension interval 17-25 may optionally be coupled together. Suitable inner bushes of the type described in conjunction with Fig. 1 are used. Examples of such bushes are also depicted by the details k and m. The different accessories to a coupling which are identified by two filled circles have been marked, as indicated in the table, by an unfilled circle with a filled inner circle. These details may consist of e.g. a T as detail a, or different elbows as details j or l. The elbows pr Ts have three alternative connection possibilities at either end. If the pipe dimensions fall outside the full lined area in the coordinate table, for instance when connecting two pipes No 20 and No 30, an adapter coupling is utilized as appears from detail c designated with the symbols filled circle, and filled circle with an unfilled inner square. A further embodiment appears from the detail d, for instance for connection between pipes No. 20 and No.35. these joints relate to reduction of diameters but they can of course also be utilized as foints for diameter increase as appears from details h and f relating to a joint between pipes No.20 and No. 5. The symbols which have been set above the different diameters in the right table in the form of circles with crosses and circle sectors differently filled relate to a type of repair coupling according to detail i which can be used for different dimensions. Thus, for all dimensions which are designated by the symbols filled circle, filled circle with an unfilled square, and unfilled circle with a filled inner square, a repair coupling according to detail i can be utilized.

In summary, a pipe coupling system according to the invention privides a great number of different coupling alternatives with a minimum of details in order to realize all these joints. The costs for stock keeping can consequently be considerably reduced, which in hitherto known systems has involved increased economical stresses on both manufacturers and dealers.

## Claims

1. Pipe coupling system, comprising different kinds of coupling details (5), such as pipe joints, elbows and Ts having threaded and rigid end portions, **characterized** in that each of these details are formed in one piece and all end portions are provided with external (29) and internal (30) threads of uniform and constant pitch, as known per se, and with a guide surface (4) for interaction with clamping and sealing means (1-3), and that the details are designed in different sizes and thus adapted that the exteral threads of each detail mate with the internal threads of the nearest in size bigger detail (Fig. 2), and vice versa, and that each end of the different details is adapted for connection to pipes and tubes of at least three different kinds (Fig 1), viz. pipes with external (20) or internal (21) threads or even pipes (6,13,14,15,18,19,), in the last case said guide surface being adapted to cooperate with said clamping and sealing means and with bushing rings (7), each having an inner seat diameter adapted to an actual pipe diameter and an outer diameter adapted to the inner diameter of the coupling detail, thereby permitting connection of even pipes and tubes with diameters less than the inner diameter of the respective coupling detail.

2. Coupling system according to claim 1, **characterized** in that the external (29) and internal (30) threads on each end portion are mutually axially displaced about one half pitch (Fig.5) to obtain more even thickness and increased strength of the material lying between the external and internal threads.

3. Coupling system according to claim 1, **characterized in that** said sealing and clamping means comprises a sealing sleeve portion (2a) which upon axial displacement against said guide surface (4) is adapted to seal either directly against the pipe (19), or against the bushing ring (7) applied to the end of the pipe.

## Patentansprüche

1. Ein Rohrverbindungssystem, bestehend aus verschiedenen Verbindungsteilen (5) wie Kupplungen, Winkeln und Abzweigungen mit starren Enden, **gekennzeichnet dadurch,** daß jedes dieser Teile in einem Stück geformt ist und alle Enden ein Außengewinde (29) und ein Innengewinde (30) mit gleichförmiger und konstanter Steigung haben, für sich genommen, und mit einer Gleitfläche (4) für Klemm- und Dichtungsvorrichtungen (1-3), und fernerhin **gekennzeichnet dadurch,** daß die Dimensionen der Teile so ausgelegt sind, daß das Außengewinde eines jeden Teils mit dem Innengewinde des nächstgrößeren Teils (Abb. 2) und umgekehrt zusammenpaßt, und daß jedes Ende der einzelnen Teile mit mindestens drei verschiedenen Rohrtypen (Abb. 1) verbunden werden kann, nämlich Rohren mit Außengewinde (20) oder Innengewinde (21) oder auch glatten Rohren (6,13,14,15,18,19), wobei im letzteren Fall die genannte Gleitfläche mit den genannten Klemm- und Dichtungsvorrichtungen sowie mit Muffenringen (7) zusammenwirkt, deren innerer Sitzdurchmesser zum jeweiligen Rohrdurchmesser, und deren Außendurchmesser zum Innendurchmesser des Verbindungsteils paßt, und dadurch die Verbindung von glatten Rohren erlaubt, die einen Kleineren Durchmesser als der Innendurchmesser des verwendeten Verbindungsteils haben.

2. Ein Rohrverbindungssystem laut Patentanspruch 1 oben, **gekennzeichnet dadurch,** daß das Außengewinde (29) und das Innengewinde (30) an beiden Enden axial um eine halbe Ganghöhe zueinander verschoben sind (Abb. 5), um eine gleichförmigere Dicke und erhöhte Festigkeit des Materials zwischen dem Außen- und dem Innengewinde zu erreichen.

3. Ein Rohrverbindungssystem laut Patentanspruch 1 oben, **gekennzeichnet dadurch,** daß die genannten Klemm- und Dichtungsvorrichtungen eine Dichtungsbuchse (2a) aufweisen, die bei axialer Verschiebung zur genannten Gleitfläche (4) entweder direkt gegen das Rohr (19) oder gegen den am Rohrende angebrachten Muffenring (7) abdichtet.

## Revendications

1. Système de raccordement de tuyaux comprenant différents types de pièces (5), tels que raccords, coudes et tés comportant une partie terminale rigide et filetée, **caractérisé par le fait** que chacune de ces pièces est moulée d'une seule pièce et que toutes les parties terminales sont munies d'un filetage extérieur (29) et d'un filetage intérieur (30) de pas uniforme et constant, tels que connus en soi, et d'une surface de guidage (4) pour l'interaction avec des moyens assurant le blocage et l'étanchéité, et par le fait que les pièces sont conçues dans différentes tailles et adaptées de telle manière que les filetages extérieurs de chaque pièce se combinent aux filetages intérieurs de la pièce de la taille immédiatement plus grande (fig. 2) et vice-versa, et que chaque extrémité des différentes pièces est adaptée au raccordement de tuyaux et de tubes de trois sortes différentes (fig. 1), c'est-à-dire des tubes avec filetage extérieur (20) ou intérieur (21) ou bien des tubes lisses (6, 13, 14, 15, 18, 19), ladite surface de guidage étant adaptée, dans ce dernier cas, pour se combiner avec lesdits moyens assurant le blocage et l'étanchéité ainsi qu'avec des douilles (7), chacune d'elles ayant un diamètre de siège intérieur adapté au diamètre du tuyau en question et un diamètre extérieur adapté au diamètre intérieur de la pièce de raccordement, permettant ainsi le raccordement de tubes et de tuyaux lisses de diamètre inférieur au diamètre intérieur de la pièce de raccordement respective.

2. Système de raccordement d'après la revendication 1, **caractérisé par le fait que** les filetages extérieurs (29) et intérieurs (30) de chaque partie terminale sont déplacés axialement les uns par rapport aux autres d'environ un demi-pas (fig. 5), pour obtenir une épaisseur plus régulière et une résistance accrue de la matière se trouvant entre le filetage extérieur et le filetage intérieur.

3. Système de raccordement d'après la revendication 1, **caractérisé par le fait que** lesdits moyens assurant le blocage et l'étanchéité comprennent une portion de manchon d'étanchéité (2a) qui, par déplacement axial contre ladite surface de guidage (4), est adaptée pour assurer l'étanchéité, soit directement contre le tuyau (19), soit contre la douille (7) appliquée à l'extrémité du tuyau.
